# EUROPÄISCHE PATENTANMELDUNG

(11) **EP 2 040 160 A1**
(43) Veröffentlichungstag der Anmeldung: **25.03.2009**
(21) Anmeldenummer: 07017790.2
(22) Anmeldetag: 11.09.2007
(51) Int. Cl.: G06F 9/44

(54) **Verfahren zur Integration einer integrierten Schaltung in eine standardisierte Softwarearchitektur für Embedded Systeme**

(71) Anmelder: Delphi Technologies, Inc., Troy, Michigan 48007 (US)
(72) Erfinder: Felder, Andreas, 51515 Kuerten (DE); Stadler, Peter, 57482 Wenden (DE); Beerhold, Jens, 50997 Köln (DE)
(74) Vertreter: Manitz, Finsterwald & Partner GbR

(57) **Zusammenfassung**

Es ist ein Verfahren zur Integration einer integrierten Schaltung in eine standardisierte Softwarearchitektur für Embedded Systeme offenbart. Das Verfahren umfasst eine Definition einer computerlesbaren standardisierten Datenstruktur, die mit den Eigenschaften der integrierten Schaltung ausgefüllt wird. Die ausgefüllte standardisierte Datenstruktur wird dann zur Definition eines Hardwaremoduls verwendet, welches die integrierte Schaltung umfasst. Die so erzeugte Hardwaremoduldefinition wird in einer _ Form exportiert, die von der standardisierten Softwarearchitektur für Embedded Systeme zur Weiterverarbeitung importiert werden kann.

## Beschreibung

Die vorliegende Erfindung betrifft allgemein Softwarearchitekturen und insbesondere ein Verfahren zur Integration einer integrierten Schaltung in eine standardisierte Softwarearchitektur für Embedded Systeme.

Die seit Jahrzehnten ungebrochen fortschreitende Miniaturisierung elektronischer Bauelemente bei gleichzeitigem Anwachsen der Komplexität derselben geht einher mit einem entsprechenden Anwachsen des Umfangs und der Komplexität von Softwaresystemen, welche zur Steuerung von Baugruppen, die elektronische Bauelemente umfassen, sowie zur Lösung von speziellen Aufgaben entwickelt werden. In diesem Kontext werden Baugruppen, welche elektronische Bauelemente umfassen, allgemein als "Hardwaremodule", Softwaresysteme zur Ansteuerung der Hardware allgemein als "Betriebssysteme" und Softwaresysteme zur Lösung spezieller Aufgaben allgemein als "Applikationen" bezeichnet.

Bei den aus der Bürowelt wohlbekannten Computersystemen, insbesondere den Personalcomputern, herrscht eine offene Hardwarearchitektur vor, die ein Austauschen von Hardwaremodulen gegen nicht identische Hardwaremodule und/oder ein Hinzufügen zusätzlicher Hardwaremodule ermöglicht. Auch ist ein temporäres Verbinden des Personalcomputers mit zusätzlichen Hardwaremodulen und Geräten über Standardschnittstellen (z.B. USB) möglich. Zu diesem Zweck umfassen die für Personalcomputer entwickelten Betriebssysteme Verfahren, welche eine Erkennung veränderter Hardware sowie eine größtenteils automatische Einbindung von Softwaremodulen ("Treibern") ermöglichen, welche zur korrekten Ansteuerung neu hinzugefügter bzw. ausgetauschter Hardwaremodule benötigt werden.

Im Unterschied dazu handelt es sich bei Embedded Systemen in der Regel um geschlossene Systeme mit fest definierten Hardwaremodulen, die nicht ohne weiteres gegen nicht identische Hardwaremodule ausgetauscht werden können. Embedded Systeme werden für fest umrissene Aufgaben und Einsatzgebiete entworfen, beispielsweise Überwachungs- und Steuerungsaufgaben in einer industriellen Umgebung oder zum Einsatz in Kraftfahrzeugen. Aufgrund eines oftmals rauen Einsatzortes und anderer industrieller Anforderungen an Robustheit und Zuverlässigkeit sowie aufgrund von Kostenüberlegungen weisen Embedded Systeme in der Regel deutlich geringere Hardware-Ressourcen (Prozessorrechenleistung, verfügbarer Arbeitsspeicher, verfügbarer Festwertspeicher, Schnittstellen etc.) auf als beispielsweise Personalcomputer. Die benötigte Zuverlässigkeit und Robustheit erschweren in der Regel den Einsatz gewisser Hardware-Technologien aus dem Personalcomputer-Umfeld (Festplatten, Lüfter, etc.) und erfordern spezielle Hardwareanpassungen (z.B. Hardware-Watchdog, um einen "Systemabsturz" zu detektieren und das System automatisch neu zu starten).

Entsprechend bestehen besondere Anforderungen an die Softwarearchitektur für Embedded Systeme. Insbesondere umfassen die Anforderungen an derartige Softwarearchitekturen gewisse Echtzeitfähigkeiten (um innerhalb einer definierten Zeitspanne eine Reaktion auf ein Ereignis zu garantieren), einen effektiven, "schlanken" Kern (d.h., das Betriebssystem eines Embedded Systems soll möglichst wenige Ressourcen benötigen) und eine große Robustheit, Zuverlässigkeit bzw. Sicherheit, um einen Einsatz in sicherheitskritischen Bereichen zu ermöglichen.

Die Entwicklung und Pflege derartiger Softwarearchitekturen für Embedded Systeme ist extrem zeit- und kostenintensiv. Aus diesem Grund gibt es kommerziell verfügbare sowie auf Open Source basierende Betriebssysteme für Embedded Systeme. Zusammen mit diesen Betriebssystemen sind darauf abgestimmte Werkzeugketten zur Anpassung der Betriebssysteme auf eine gewünschte Hardwareplattform bzw. ein gewünschtes Hardwaremodul sowie zur Entwicklung von Applikationen in einer höheren Programmiersprache (oftmals C oder C++) erhältlich, so dass vollständige Software-Entwicklungssysteme für Embedded Systeme verfügbar sind.

Um ein auf spezielle Anforderungen zugeschnittenes Hardwaremodul, das in der Regel mehrere integrierte Schaltungen (z.B. ASICs, FPGAs, CPLDs etc.) und/oder "Building Blocks" (vgl. nachfolgende Definition) umfasst, in eine entsprechende Softwarearchitektur für Embedded Systeme einzubinden bzw. ein Betriebssystem für Embedded Systeme darauf zum Laufen zu bringen, sind zumindest folgende zwei Schritte notwendig:
1. Erstellen und/oder Anpassen von Softwaremodulen (Treibern) zur Ansteuerung der integrierten Schaltungen und/oder "Building Blocks", die auf dem Hardwaremodul verwendet werden, auf der Grundlage der Dokumentation der integrierten Schaltungen bzw. der "Building Blocks" unter Berücksichtigung der Softwarearchitektur des verwendeten Betriebssystems für Embedded Systeme.
2. Konfigurieren des Betriebssystems für Embedded Systeme, um die erstellten und/oder angepassten Softwaremodule einzubinden, wobei die durch den Schaltplan des Hardwaremoduls vorgegebenen Anbindungen der einzelnen integrierten Schaltungen bzw. "Building Blocks" berücksichtigt werden müssen.

Sowohl beim Erstellen/Anpassen von Softwaremodulen als auch beim Konfigurieren des Betriebssystems für Embedded Systeme muss die Dokumentation der verwendeten integrierten Schaltungen bzw. "Building Blocks" herangezogen werden; d.h. der jeweilige Entwickler und/oder Projektingenieur muss die Dokumentation studieren und umsetzen.

Der voranstehend beschriebene Vorgang der Einbindung eines Hardwaremoduls in eine Softwarearchitektur für Embedded Systeme erweist sich in der Praxis als aufwändig, komplex und fehleranfällig.

Es ist daher die Aufgabe der Erfindung, den Vorgang der Einbindung eines Hardwaremoduls in eine Softwarearchitektur für Embedded Systeme zu erleichtern.

Diese Aufgabe wird durch die Gegenstände der unabhängigen Ansprüche gelöst.

Im Folgenden wird das erfindungsgemäße Verfahren der Einfachheit halber unter dem Blickwinkel der Integration einer integrierten Schaltung beschrieben. Das erfindungsgemäße Verfahren kann jedoch gleichermaßen auch zur Integration so genannter "Building Blocks" in eine standardisierte Softwarearchitektur für Embedded Systeme verwendet werden. Unter "Building Blocks" werden in diesem Kontext beispielsweise standardisierte Sensoren und Aktoren sowie abgegrenzte, diskret aufgebaute Schaltungsabschnitte, die eine fest definierte Funktion aufweisen, verstanden.

Das erfindungsgemäße Verfahren zur Integration einer integrierten Schaltung in eine standardisierte Softwarearchitektur für Embedded Systeme umfasst eine Definition einer computerlesbaren standardisierten Datenstruktur, in der sämtliche Informationen abgelegt werden können, die zur Beschreibung die Eigenschaften der integrierten Schaltung benötigt werden. Diese standardisierte Datenstruktur wird mit den Eigenschaften der integrierten Schaltung ausgefüllt, so dass alle für eine spezielle integrierte Schaltung bekannten Informationen (elektrische Spezifikation, Programmierschnittstelle, Fehler) enthalten sind. Die ausgefüllte standardisierte Datenstruktur wird verwendet, um ein Hardwaremodul zu definieren, welches die spezielle integrierte Schaltung umfasst. Schließlich wird die Hardwaremoduldefinition in einer Form exportiert, die von einer standardisierten Softwarearchitektur für Embedded Systeme zur Weiterverarbeitung importiert werden kann.

Die in dem erfindungsgemäßen Verfahren vorgesehene Verwendung der computerlesbaren standardisierten Datenstruktur, die alle bekannten Informationen über die integrierte Schaltung umfasst, weist folgende Vorteile auf:
- Entwickler von Softwaremodulen zur Einbindung der integrierten Schaltung und Projektingenieure, welche die Definition des Hardwaremoduls vornehmen, können mit ihrer Arbeit ohne ein zeitraubendes Studium der Dokumentation der integrierten Schaltung beginnen, sobald eine ausgefüllte standardisierte Datenstruktur vorliegt.
- Geeignete Softwarewerkzeuge können dem Entwickler von Softwaremodulen und/oder dem Projektingenieur jeweils genau die Informationen aus der ausgefüllten standardisierten Datenstruktur bereitstellen, die zur Lösung der jeweiligen Aufgabe benötigt werden, was zu einer wesentlichen Arbeitsbeschleunigung sowie zu einer Verringerung der Fehlerrate führen kann.
- Neue Erkenntnisse über eine bereits verwendete integrierte Schaltung (z.B. ein nachträglich erkannter Fehler) können schnell aufgenommen und berücksichtigt werden.
- Eine neue Generation der integrierten Schaltung (z.B. aufgrund eines Shrink-Prozesses, einer neuen Maske oder einer neuen Firmware) oder eine neue integrierte Schaltung, die eine vorhandene integrierte Schaltung ersetzen soll, kann leicht integriert werden.

Bei einer bevorzugten Ausführungsform des Verfahrens wird zur Definition der standardisierten Datenstruktur eine erweiterbare Beschreibungssprache zur Beschreibung hierarchisch strukturierter Daten verwendet. Beschreibungssprachen, insbesondere die Familie der Auszeichnungssprachen, eignen sich sehr gut zur Beschreibung der Eigenschaften physikalischer Objekte. Zudem erleichtern Sie die Verwendung verschiedener Abstraktionsebenen. So kann mittels einer geeigneten Struktur beispielsweise ein Feld an Speicherzellen definiert werden und das gesamte Feld, eine Zelle des Feldes oder ein Bit aus einer Zelle des Feldes adressiert werden. Erweiterbare Beschreibungssprachen, insbesondere erweiterbare Auszeichnungssprachen, verfügen zudem über das Merkmal der Erweiterbarkeit des "Sprachumfangs". Damit lassen sich unterschiedlichste Eigenschaften einer integrierten Schaltung vollständig abbilden.

Eine bevorzugte Ausführungsform sieht vor, dass die standardisierte Datenstruktur vom Hersteller oder Vertreiber der integrierten Schaltung ausgefüllt wird. Dies bietet sich an, da der Hersteller bzw. Vertreiber über sämtliche Informationen zu der integrierten Schaltung verfügt und diese in einer Dokumentation zur Verfügung stellt, so dass der Aufwand zum Ausfüllen der standardisierten Datenstruktur überschaubar bleibt. Durch das Bereitstellen einer ausgefüllten standardisierten Datenstruktur wird der Hersteller bzw. Vertreiber zudem die Marktakzeptanz der integrierten Schaltung erhöhen. Alternativ kann die standardisierte Datenstruktur auch von einem Softwareentwickler und/oder einem Projektingenieur ausgefüllt werden.

Bei bevorzugten Ausführungsformen des Verfahrens zur Integration einer integrierten Schaltung in eine standardisierte Softwarearchitektur für Embedded Systeme umfasst die Definition des Hardwaremoduls, dass zunächst Anforderungen an das Hardwaremodul definiert werden. Diese umfassen mechanische Anforderungen (z.B. Moduldimensionen, Anordnung von Verbindern, Bohrlöchern etc), elektrische Anforderungen (Betriebsspannung, Betriebsstrom, Leistungsaufnahme etc.), Umgebungsanforderungen (Arbeitstemperaturbereich, Lagertemperaturbereich, Feuchtigkeitsresistenz, Vibrationsfestigkeit etc.), funktionale Anforderungen (welche Funktionen muss das Hardwaremodul erfüllen) usw. Anschließend wird die ausgefüllte standardisierte Datenstruktur (und ggf. weitere ausgefüllte standardisierte Datenstrukturen) hinzugefügt und das Hardwaremodul konfiguriert. Die Konfiguration des Hardwaremoduls wiederum umfasst die Schritte, dass Beziehungen zwischen den integrierten Schaltkreisen, die von dem Hardwaremodul umfasst sind, konfiguriert werden, die Eingabe/Ausgabe-Schnittstellen und Kommunikationsschnittstellen des Hardwaremoduls konfiguriert werden und Softwaremodule zur Integration des Hardwaremoduls in die standardisierte Softwarearchitektur für Embedded Systeme erstellt werden.

Im Zuge der Definition des Hardwaremoduls werden somit die ausgefüllten standardisierten Datenstrukturen vernetzt (bzw. der Schaltplan des Hardwaremoduls definiert) und Softwaremodule zur Einbindung in die Softwarearchitektur des Embedded Systems erstellt.

Ein erfindungsgemäßes computerlesbares Speichermedium umfasst ein darauf gespeichertes Computerprogramm, welches einen Satz von Instruktionen repräsentiert. Diese veranlassen einen Computer dazu, wenn sie von diesem ausgeführt werden, Anforderungen an ein Hardwaremodul einzulesen und ausgefüllte standardisierte Datenstrukturen einzulesen, welche die Eigenschaften integrierter Schaltkreise beschreiben, die von dem Hardwaremodul umfasst sind. Zudem veranlassen sie den Computer dazu, wenn sie von diesem ausgeführt werden, Beziehungen zwischen den von dem Hardwaremodul umfassten integrierten Schaltkreisen einzulesen, eine Konfiguration von Eingabe/Ausgabe-Schnittstellen und Kommunikationsschnittstellen des Hardwaremoduls einzulesen, eine Erstellung von Softwaremodulen zu unterstützen, die zur Integration des Hardwaremoduls in eine standardisierte Softwarearchitektur für Embedded Systeme erforderlich sind, und die eingelesenen Daten und erstellten Softwaremodule in einem von einer standardisierten Softwarearchitektur für Embedded Systeme lesbaren Format zu exportieren.

Das erfindungsgemäße computerlesbare Speichermedium mit dem darauf gespeicherten Computerprogramm unterstützt die Integration eines Hardwaremoduls in eine standardisierte Softwarearchitektur für Embedded Systeme dadurch, dass es wesentliche Schritte bei der Erstellung von Softwaremodulen und bei der Definition eines Hardwaremoduls erleichtert. Durch die Möglichkeit zum Einlesen ausgefüllter standardisierter Datenstrukturen wird die Einbindung integrierter Schaltungen in die Hardwaremoduldefinition wesentlich vereinfacht und beschleunigt, da eine Definition der eingelesenen integrierten Schaltungen in der Hardwaremoduldefinition bereits durch das Einlesen erledigt wird. Auf ähnliche Weise wird die Erstellung und/oder Anpassung von Softwaremodulen unterstützt und erleichtert, da alle dazu benötigten Informationen durch das Einlesen der ausgefüllten standardisierten Datenstrukturen und das Einlesen der Anforderungen an das Hardwaremodul bereitgestellt sind und nicht mehr umständlich nachgeschlagen werden müssen.

Besonders bevorzugte Ausführungsformen des erfindungsgemäßen computerlesbaren Speichermediums mit dem darauf gespeicherten Computerprogramm sind auf einen Einsatz in der Automobilindustrie gerichtet. Bei diesen Ausführungsformen umfasst das Hardwaremodul in der Regel eine elektronische Steuerungseinheit (ECU) und die standardisierte Softwarearchitektur für Embedded Systeme, in welche das Hardwaremodul integriert werden soll, umfasst die offene Systemarchitektur der Kraftfahrzeugindustrie (AUTOSAR Automotive Open System Architecture).

Nachfolgend wird die Erfindung rein beispielhaft anhand einer vorteilhaften Ausführungsform unter Bezugnahme auf die beigefügte Zeichnung beschrieben. In dieser ist:
- Fig. 1: eine schematische Darstellung einer Ausführungsform des erfindungsgemäßen Verfahrens zur Integration einer integrier- ten Schaltung in eine standardisierte Softwarearchitektur für Embedded Systeme;
- Fig. 2: einen schematischen Aufbau eines Hardwaremoduls, der bei- spielhafte integrierte Schaltungen zeigt;
- Fig. 3: ein abstrakter schematischer Aufbau der Softwarearchitektur des AutoSAR-Systems, der die Stellen in dem AutoSAR- System aufzeigt, an denen das erfindungsgemäße Verfahren eingreift; und
- Fig. 4A-4F: ein Beispiel der erfindungsgemäßen standardisierten Daten- struktur.

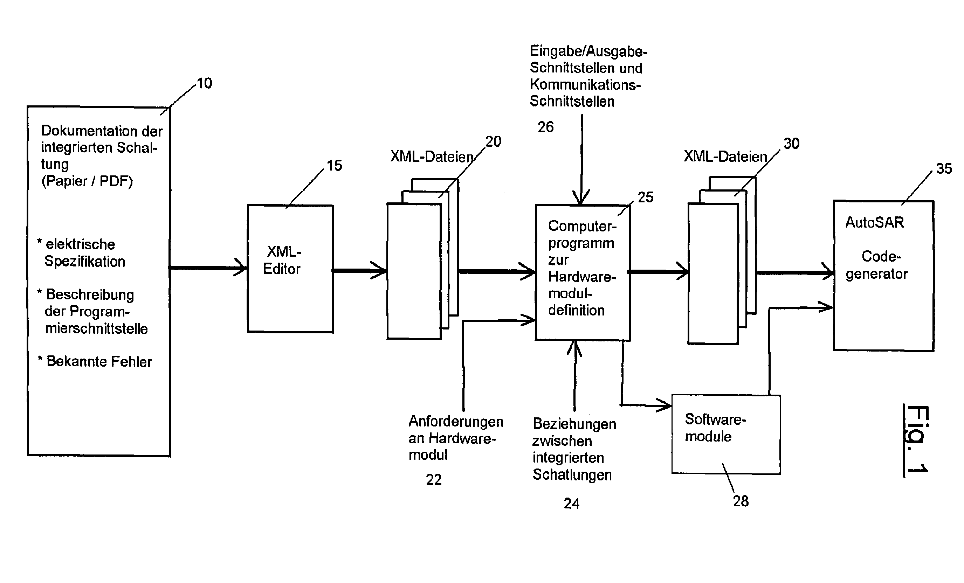

Fig. 1 stellt das erfindungsgemäße Verfahren zur Integration einer integrierten Schaltung in eine standardisierte Softwarearchitektur für Embedded Systeme am Beispiel des AutoSAR-Systems dar. Dabei wird aus einer Dokumentation 10 einer integrierten Schaltung, die allgemein eine elektrische Spezifikation, eine Beschreibung der Programmierschnittstelle der integrierten Schaltung sowie eine Liste bekannter Fehler umfasst, mit Hilfe eines XML-Editors 15 eine oder mehrere XML-Dateien 20 erzeugt. Die XML-Dateien 20 weisen hierbei die erfindungsgemäße standardisierte Datenstruktur auf und enthalten sämtliche in der Dokumentation 10 der integrierten Schaltung enthaltenen Informationen. Zur Erzeugung der XML-Dateien 20 kann ein beliebiger in der Technik bekannter XML-Editor 15 verwendet werden. Das Erstellen der XML-Dateien 20 kann durch den Hersteller oder Vertreiber der integrierten Schaltung oder durch einen Softwareentwickler bzw. Projektingenieur erfolgen. Auch eine automatische Generierung der XML-Dateien 20 aus der Dokumentation 10 der integrierten Schaltung ist mit Hilfe einer geeigneten Software möglich.

Ein geeignetes Computerprogramm 25 zur Hardwaremoduldefinition liest die XML-Dateien 20 und Anforderungen 22 an das zu definierende Hardwaremodul ein. Diese umfassen mechanische Anforderungen (z.B. Moduldimensionen, Anordnung von Verbindern und Bohrlöchern, Dicke und Beschaffenheit von Platinen, etc), elektrische Anforderungen (Betriebsspannung, Betriebsstrom, Leistungsaufnahme etc.), Umgebungsanforderungen (Arbeitstemperaturbereich, Lagertemperaturbereich, Feuchtigkeitsresistenz, Vibrationsfestigkeit etc.), funktionale Anforderungen (welche Funktionen muss das Hardwaremodul erfüllen) usw. Diese Anforderungen 22 können dabei sowohl aus Dateien eingelesen als auch interaktiv eingegeben werden. Basierend auf den XML-Dateien 20 und den Anforderungen 22 liest das Computerprogramm 25 Beziehungen 24 zwischen den integrierten Schaltkreisen, die mit Hilfe der XML-Dateien 20 bereits eingelesen sind, und anderen von dem zu definierenden Hardwaremodul umfassten Komponenten ein, und konfiguriert benötigte Eingabe/Ausgabeschnittstellen und Kommunikationsschnittstellen 26. Dieser Eingabe- und Konfigurationsprozess erfolgt interaktiv.

Ein Anwender des Computerprogramms 25 kann nun mit Unterstützung des Computerprogramms 25 eventuell benötigte Softwaremodule 28 erstellen bzw. konfigurieren, um eine korrekte Steuerung aller Komponenten zu ermöglichen, die in der Hardwaremoduldefinition umfasst sind.

Schließlich wird die erstellte Hardwaremodulkonfiguration in einem Format exportiert, das von den Werkzeugen der gewünschten standardisierten Softwarearchitektur für Embedded Systeme, bei dieser Ausführungsform AutoSAR, verarbeitet werden kann. Für AutoSAR werden bei diesem Beispiel XML-Dateien 30 generiert.

Die voranstehend beschriebenen Schritte zur Definition eines Hardwaremoduls können auch in anderer Reihenfolge und auch iterativ ausgeführt werden, bis das Resultat den Anforderungen entspricht.

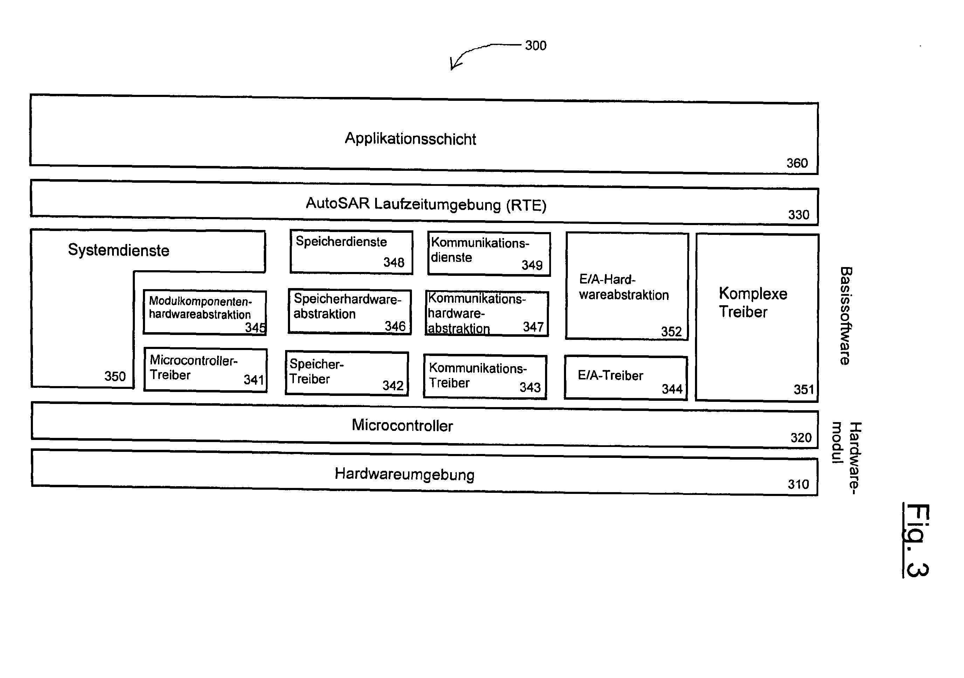

Die erstellten Softwaremodule 28 sowie die XML-Dateien 30 werden anschließend von den jeweiligen Werkzeugen der verwendeten standardisierten Softwarearchitektur für Embedded Systeme weiterverarbeitet. Bei AutoSAR ist dies typischerweise ein Codegenerator und ein Compilierund Linkvorgang, deren Resultat eine AutoSAR-Laufzeitumgebung (vgl. Fig. 3) ist, die auf das definierte Hardwaremodul angepasst ist.

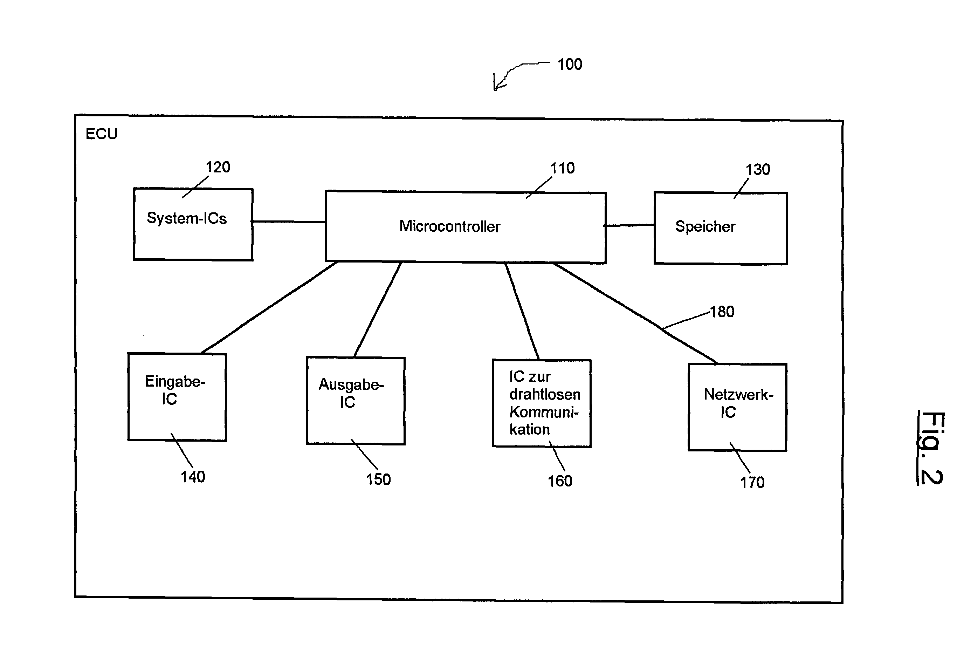

Fig. 2 zeigt einen schematischen Aufbau eines Hardwaremoduls, in diesem Beispiel einer typischen elektronischen Steuerungseinheit (ECU) 100, wie sie bei modernen Kraftfahrzeugen verwendet wird. Die ECU 100 umfasst einen Microcontroller 110, der mit einem Satz von System-ICs 120 verbunden ist, die er zum korrekten Funktionieren benötigt. Zudem kann der Microcontroller 110 auf einen Speicher 130 zugreifen, der in der Regel als Festwertspeicher (z.B. ein EEPROM) ausgebildet ist und Befehle und/oder Daten enthält, auf die der Microcontroller 110 im Betrieb zugreift. Ein Arbeitsspeicher (RAM) ist aus Platz- und Kostengründen in der Regel bereits im Microcontroller 110 vollständig enthalten.

Zur Ausführung der speziellen Steuerungsaufgaben, für welche die ECU 100 entwickelt wurde, weist die ECU 100 in der Regel eine Reihe von integrierten Bausteinen (ASICs, FPGAs, CPLDs, usw.) auf, die für spezielle Funktionen entwickelt und/oder angepasst sind, beispielsweise Eingabe-ICs 140, Ausgabe-ICs 150, Kommunikations-ICs für drahtlose Kommunikation 160 sowie für drahtgebundene Kommunikation 170, usw. Der Microcontroller 110 ist mit den voranstehend aufgeführten integrierten Bausteinen 140, 150, 160 und 170 elektrisch verbunden, um diese zu steuern und Daten auszutauschen. Die elektrische Verbindung ist dabei unter Verwendung bekannter Techniken und Kommunikationsprotokolle ausgeführt; beispielsweise wird hierfür der SPI-Bus (Serial Peripheral Interface Bus) 180 verwendet.

Zur Integration der in Fig. 2 gezeigten integrierten Schaltungen (ICs) 140, 150, 160 und 170 in eine standardisierte Softwarearchitektur für Embedded Systeme wird das erfindungsgemäße Verfahren verwendet, um diesen Vorgang zu vereinfachen und zu beschleunigen.

In Fig. 3 ist ein abstrakter schematischer Aufbau 300 der Softwarearchitektur des AutoSAR-Systems gezeigt. Das Hardwaremodul, dessen Definition durch das erfindungsgemäße Verfahren erleichtert wird, besteht aus den Blöcken Hardwareumgebung 310 und Microcontroller 320. Der Block Hardwareumgebung 310 umfasst unter anderem die integrierten Schaltungen 140, 150, 150 und 170 von Fig. 2, deren Integration durch eine Verwendung der standardisierten Datenstruktur erleichtert wird. Zur Anpassung der AutoSAR Laufzeitumgebung (RTE) 330 an die Hardwareumgebung 310 und den Microcontroller 320 ist eine Basissoftware vorgesehen, die mehrere Komponenten umfasst. Diese Komponenten sind in drei Schichten angeordnet: Die Treiberschicht umfasst die Komponenten 341, 342, 343 und 344, die Abstraktionsschicht die Komponenten 345, 346 und 347 und die Diensteschicht die Komponenten 348 und 349. Zudem gibt es die Komponenten 350 (Systemdienste) und 351 (komplexe Treiber), die alle drei Schichten umfassen. Schließlich ist die Komponente 352 (E/A-Hardwareabstraktion) zu nennen, welche in der Abstraktionsschicht und der Diensteschicht angesiedelt ist. Das erfindungsgemäße Verfahren zielt darauf ab, die Erstellung der E/A-Hardwareabstraktion zu vereinfachen. Die AutoSAR Laufzeitumgebung 330 bedient sich der voranstehend aufgezählten Komponenten der Basissoftware, um den Applikationen, die in der Applikationsschicht 360 laufen, die benötigten Funktionen bereitzustellen. Dazu ruft sie standardisierte Funktionen auf, die von den jeweils angesprochenen Komponenten bereitgestellt werden müssen. Bei der Erstellung der Softwaremodule zur Ansteuerung der integrierten Schaltungen muss darauf geachtet werden, diese Schnittstelle korrekt zu implementieren. Die AutoSAR Laufzeitumgebung 330 stellt eine hardwareunabhängige Plattform bereit; das bedeutet, dass eine Applikation der Applikationsschicht 360 auch auf einem anderen Hardwaremodul laufen kann, das über die AutoSAR Laufzeitumgebung verfügt.

Nachfolgend wird die erfindungsgemäße computerlesbare standardisierte Datenstruktur anhand einer bevorzugten Ausführungsform genauer erläutert. Zur Definition dieser Datenstruktur wurde XML (eXtensible Markup Language) verwendet. XML verwendet "Tags" bzw. Markierungen, um Objekte zu beschreiben. Diese Tags können ineinander geschachtelt werden, wodurch sich hierarchische Strukturen abbilden lassen. Bei der beschriebenen standardisierten Datenstruktur sind die strukturgebenden Tags vorgegeben.

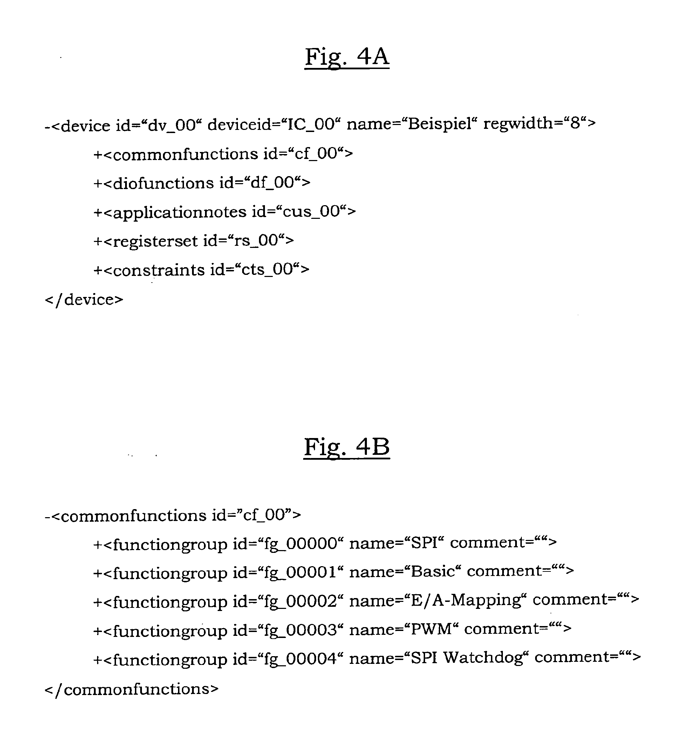

Fig. 4A zeigt die oberste Hierarchieebene der erfindungsgemäßen standardisierten Datenstruktur. Die integrierte Schaltung mit Namen "Beispiel" wird in den Kapiteln "commonfunctions" (allgemeine Funktionen des ICs, z.B. ein Watchdog), "diofunctions" (spezielle Eingabe/Ausgabe-Funktionen des ICs), "applicationnotes" (Definition von Funktionsaufrufen), "registerset" (Beschreibung der Register des ICs) und "constraints" (Beschränkungen bzw. Grenzen des ICs) beschrieben. Ein Pluszeichen ("+") vor einer Zeile zeigt an, dass die Zeile weitere Zeilen "enthält" und somit die Überschrift für die "enthaltenen" Zeilen bildet.

In Fig.4B ist das Kapitel "commonfunctions" aufgeschlagen. Die integrierte Schaltung "Beispiel" von Fig. 4A verfügt demnach im Kapitel "commonfunctions" über insgesamt fünf Funktionsgruppen, die durch Zeilen gekennzeichnet sind, die mit dem Tag <functiongroup> beginnen. Die Anzahl der Funktionsgruppen hängt von der zu beschreibenden integrierten Schaltung ab und kann sowohl größer als auch kleiner als fünf sein. Der Name der Funktionsgruppen kann vom Anwender festgelegt werden und sollte die Funktion sinnvoll bezeichnen.

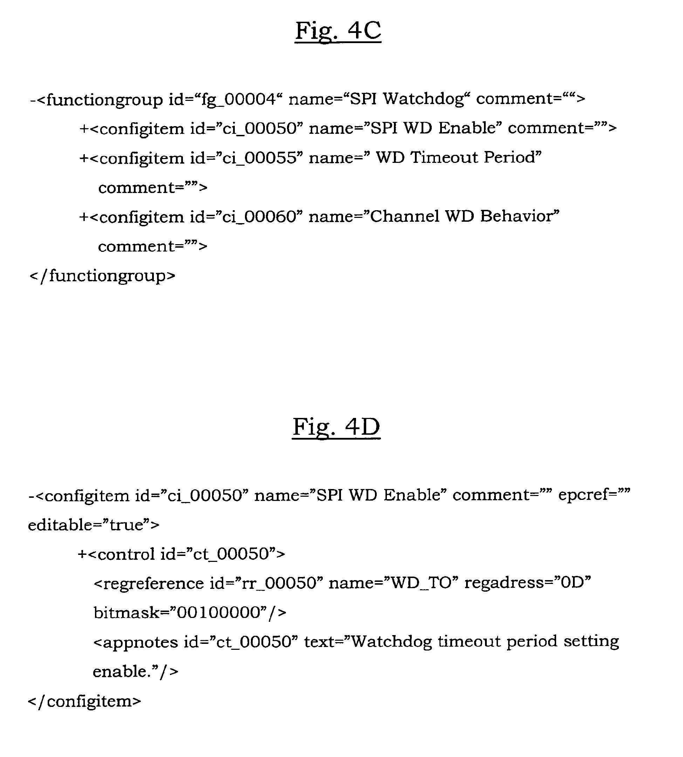

Bei Fig. 4C wurde die Funktionsgruppe mit Namen "SPI Watchdog" aufgeschlagen. Diese Funktionsgruppe enthält drei Eigenschaften, die jeweils in einem Eintrag mit dem Tag <configitem> umfasst sind. Ähnlich wie die Funktionsgruppen werden auch diese "Konfigurationsgegenstände" durch eine ID und einen Namen gekennzeichnet.

Der erste "Konfigurationsgegenstand" von Fig. 4C wird in Fig. 4D aufgeschlagen dargestellt. Dieser enthält neben einem <control>-Tag, der nachfolgend zu erörternde Datenstrukturen enthält, einen <regreference>-Tag und einen <appnotes>-Tag. Im dargestellten Beispiel von Fig. 4D wird mit dem <regreference>-Eintrag ein Register mit dem Namen "WD_TO" und der Adresse 0Dh definiert, das den SPI-Watchdog aktiviert, wenn Bit 5 (d.h. das Bit im Register, das die dritthöchste Wertigkeit besitzt), auf "1" gesetzt ist. Der <appnotes>-Eintrag ermöglicht genauere Angaben zu dem zugehörigen <control>-Tag.

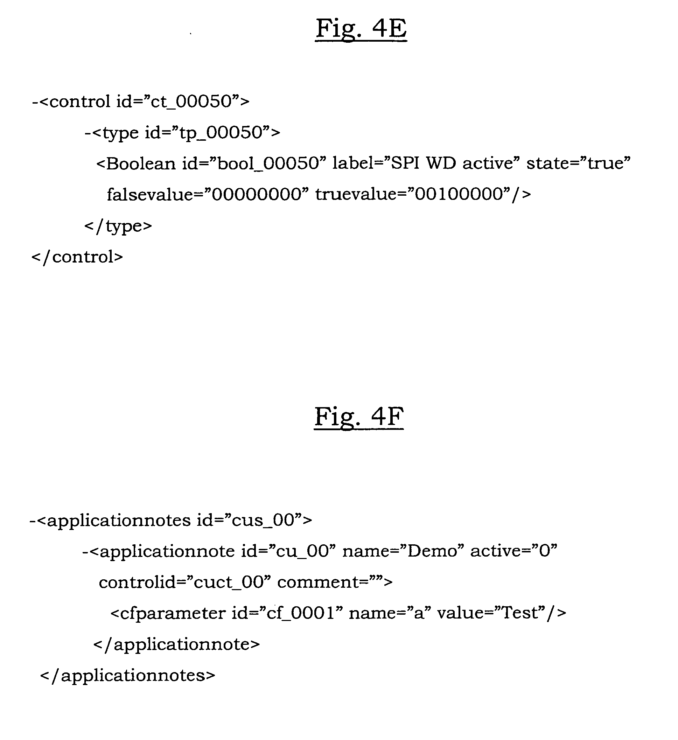

Fig. 4E zeigt den <control>-Tag von Fig. 4D aufgeschlagen. Die Datenstruktur besteht bei diesem Beispiel aus einem Booleschen Wert, der die Zustände "Wahr" und "Falsch" annehmen kann, wobei "Falsch" durch den Registerinhalt "00000000" und "Wahr" durch den Registerinhalt "00100000" repräsentiert wird. Neben Booleschen Werten werden auch Integer, String und Aufzählung (enumeration) unterstützt. Mit Aufzählungen kann man aus den Grunddatentypen komplexere Datenstrukturen zusammensetzen.

In Fig. 4A wird ein Kapitel mit der Überschrift "applicationnotes" gezeigt, das in Fig. 4F aufgeschlagen dargestellt ist. Jeder Eintrag unter dem Tag <applicationnote> in diesem Kapitel stellt eine Funktionsschnittstelle zu der AutoSAR Laufzeitumgebung bereit. In Fig. 4F ist eine Funktion mit Namen "Demo" definiert.

Die beschriebene standardisierte Datenstruktur legt über die fest definierten Tags strikt und eindeutig fest, wie die Daten in die Struktur eingeordnet werden müssen. Andererseits ist sie sehr flexibel, indem sie große Freiheit bei der Vergabe von Namen ermöglicht. Die Möglichkeit zur Beschreibung der Funktion einzelner Objekte erleichtert zudem dem Softwareentwickler und/oder dem Projektingenieur, der die standardisierte Datenstruktur verwendet, das Verständnis wesentlich.

Wie voranstehend erwähnt, läuft eine Integration von "Building Blocks" (z.B. standardisierte Sensoren, standardisierte Aktoren oder diskret aufgebaute Schaltungsabschnitte, die eine fest definierte Funktion aufweisen) auf ähnliche Weise ab. Sobald Beschreibungen oder Datenblätter dieser Elemente vorhanden sind, kann eine standardisierte Datenstruktur mit den entsprechenden Daten gefüllt werden und eine Integration der "Building Blocks" in die standardisierte Softwarearchitektur für Embedded Systeme durchgeführt werden.

## Patentansprüche

1. Verfahren zur Integration einer integrierten Schaltung in eine standardisierte Softwarearchitektur für Embedded Systeme, das umfasst, dass
eine computerlesbare standardisierte Datenstruktur definiert wird;
die standardisierte Datenstruktur mit den Eigenschaften der integrierten Schaltung ausgefüllt wird;
die ausgefüllte standardisierte Datenstruktur zur Definition eines Hardwaremoduls verwendet wird, welches die integrierte Schaltung umfasst; und
die Hardwaremoduldefinition in einer Form exportiert wird, die von der standardisierten Softwarearchitektur für Embedded Systeme zur Weiterverarbeitung importiert werden kann.

2. Verfahren nach Anspruch 1,
**dadurch gekennzeichnet, dass**
zur Definition der standardisierten Datenstruktur eine erweiterbare Beschreibungssprache zur Beschreibung hierarchisch strukturierter Daten verwendet wird.

3. Verfahren nach Anspruch 2,
**dadurch gekennzeichnet, dass**
die standardisierte Datenstruktur von einem Hersteller oder Vertreiber der integrierten Schaltung oder einem Entwickler des Hardwaremoduls mit den Eigenschaften der integrierten Schaltung ausgefüllt wird.

4. Verfahren nach Anspruch 3,
**dadurch gekennzeichnet, dass**
die Definition des Hardwaremoduls umfasst, dass
Anforderungen an das Hardwaremodul definiert werden; die ausgefüllte standardisierte Datenstruktur und ggf. weitere ausgefüllte standardisierte Datenstrukturen hinzugefügt werden und
das Hardwaremodul konfiguriert wird.

5. Verfahren nach Anspruch 4,
**dadurch gekennzeichnet, dass**
die Konfiguration des Hardwaremoduls umfasst, dass
Beziehungen zwischen den integrierten Schaltkreisen, die von dem Hardwaremodul umfasst sind, konfiguriert werden;
Eingabe/Ausgabe-Schnittstellen und Kommunikationsschnittstellen des Hardwaremoduls konfiguriert werden; und
Softwaremodule zur Integration des Hardwaremoduls in die standardisierte Softwarearchitektur für Embedded Systeme erstellt werden.

6. Computerlesbares Speichermedium mit einem darauf gespeicherten Computerprogramm, das einen Satz von Instruktionen repräsentiert, die, wenn sie von einem Computer ausgeführt werden, den Computer veranlassen,
Anforderungen an ein Hardwaremodul einzulesen,
ausgefüllte standardisierte Datenstrukturen einzulesen, welche die Eigenschaften integrierter Schaltkreise beschreiben, die von dem Hardwaremodul umfasst sind,
Beziehungen zwischen den von dem Hardwaremodul umfassten integrierten Schaltkreisen einzulesen,
eine Konfiguration von Eingabe/Ausgabe-Schnittstellen und Kommunikationsschnittstellen des Hardwaremoduls einzulesen;
eine Erstellung von Softwaremodulen zu unterstützen, die zur Integration des Hardwaremoduls in eine standardisierte Softwarearchitektur für Embedded Systeme erforderlich sind, und
die eingelesenen Daten und erstellten Softwaremodule in einem von der standardisierten Softwarearchitektur für Embedded Systeme lesbaren Format zu exportieren.

7. Computerlesbares Speichermedium nach Anspruch 6,
**dadurch gekennzeichnet, dass**
das Hardwaremodul eine elektronische Steuerungseinheit (ECU) umfasst.

8. Computerlesbares Speichermedium nach Anspruch 6,
**dadurch gekennzeichnet, dass**
die standardisierte Softwarearchitektur für Embedded Systeme die offene Systemarchitektur der Kraftfahrzeugindustrie (AUTOSAR Automotive Open System Architecture) umfasst.
